(19) Europäisches Patentamt
European Patent Office
Office européen des brevets

(11) EP 1 930 351 A1

(12) **EUROPEAN PATENT APPLICATION**
published in accordance with Art. 153(4) EPC

(43) Date of publication:
**11.06.2008 Bulletin 2008/24**

(21) Application number: **06810316.7**

(22) Date of filing: **20.09.2006**

(51) Int Cl.:
***C08F 210/02*** *(2006.01)* ***C08F 232/00*** *(2006.01)*

(86) International application number:
**PCT/JP2006/318620**

(87) International publication number:
**WO 2007/034828 (29.03.2007 Gazette 2007/13)**

(84) Designated Contracting States:
**DE**

(30) Priority: **21.09.2005 JP 2005274560**

(71) Applicant: **Mitsui Chemicals, Inc.**
**Tokyo 105-7117 (JP)**

(72) Inventors:
- **KOSAKA, Toshitaka**
  **Kuga-gun**
  **Yamaguchi 740-0061 (JP)**
- **SUZUKI, Takeshi**
  **Kuga-gun**
  **Yamaguchi 740-0061 (JP)**
- **YAMAGUCHI, Tomohiro**
  **Kuga-gun**
  **Yamaguchi 740-0061 (JP)**

(74) Representative: **HOFFMANN EITLE**
**Patent- und Rechtsanwälte**
**Arabellastrasse 4**
**81925 München (DE)**

# (54) METHOD FOR PRODUCING CYCLIC OLEFIN RANDOM COPOLYMER

(57) A process for producing a cyclic olefin random copolymer by copolymerizing ethylene with a specific cyclic olefin in the presence of a polymerization catalyst containing a transition metal catalyst component and a co-catalyst component, wherein in the process for producing a cyclic olefin random copolymer, at least one component of the transition metal catalyst component and the co-catalyst component is brought into contact with the cyclic olefin, and then brought into contact with the ethylene.

EP 1 930 351 A1

## Description

TECHNICAL FIELD

The present invention relates to a process for producing a cyclic olefin random copolymer by copolymerizing ethylene with a cyclic olefin.

BACKGROUND ART

A cyclic olefin random copolymer obtained from ethylene and a specific cyclic olefin is a synthetic resin well-balanced in optical properties, mechanical properties, thermal properties, and the like, and can be employed in the field of optical materials such as optical memory disc, optical fiber, and lens.

However, although the possibility is very small, there had been the case where a reading error is generated when an optical memory disc is manufactured from such cyclic olefin random copolymer. A part of this reading error is caused by a polyethylene component included as the impurity in the cyclic olefin random copolymer. Consequently, a process for producing a cyclic olefin random copolymer capable of giving a reduced content of polyethylene component included as the impurity has been strongly demanded.

In Patent Document 1, a method of supplying an unsaturated cyclic olefin or a mixture of the unsaturated cyclic olefin and a solvent onto inner peripheral wall of polymerization vessel upper than interface between gaseous phase and liquid phase in the polymerization vessel, when producing a cyclic olefin random copolymer by copolymerizing ethylene with an unsaturated cyclic olefin in liquid phase in the presence of a catalyst and a solvent in the polymerization vessel, has been disclosed. In this document, it is described that a large content of polyethylene component and a production of polymer insoluble in a hydrocarbon solvent employed during the polymerization reaction can be prevented according to the disclosed method.

Additionally, in Patent Document 2, a manipulation of separating and removing a small amount of solid polyethylene, which is produced as a by-product, from a cyclic olefin random copolymer-containing solution obtained by copolymerizing ethylene with a cyclic olefin has been disclosed.

Further, in Patent Document 3, a method of feeding both the catalytic components to a specific position in the polymerization vessel from nozzles for feeding, when producing a cyclic olefin random copolymer by copolymerizing ethylene with cyclic olefin in the presence of a catalyst composed of a soluble vanadium compound and an organoaluminumoxy compound in a hydrocarbon solvent or in liquid phase while being stirred, has been disclosed. In this document, it is described that the polyethylene content can be reduced according to the disclosed method.

[Patent Document 1] JP-A-2-191603
[Patent Document 2] JP-A-3-255105
[Patent Document 3] JP-A-6-228284

DISCLOSURE OF THE INVENTION

However, specific manipulations or processes have been required to reduce the content of polyethylene component in related arts disclosed in aforementioned Patent Documents.

The present invention is made in the light of related arts mentioned above, and is to provide a process for producing a cyclic olefin random copolymer, wherein the content of polyethylene component included as the impurity is reduced without employing specific manipulations or processes.

[1] A process for producing a cyclic olefin random copolymer by copolymerizing:

(a) ethylene; with
(b) at least one cyclic olefin selected from the group consisting of unsaturated monomers each represented by the following general formula (1) or (2):

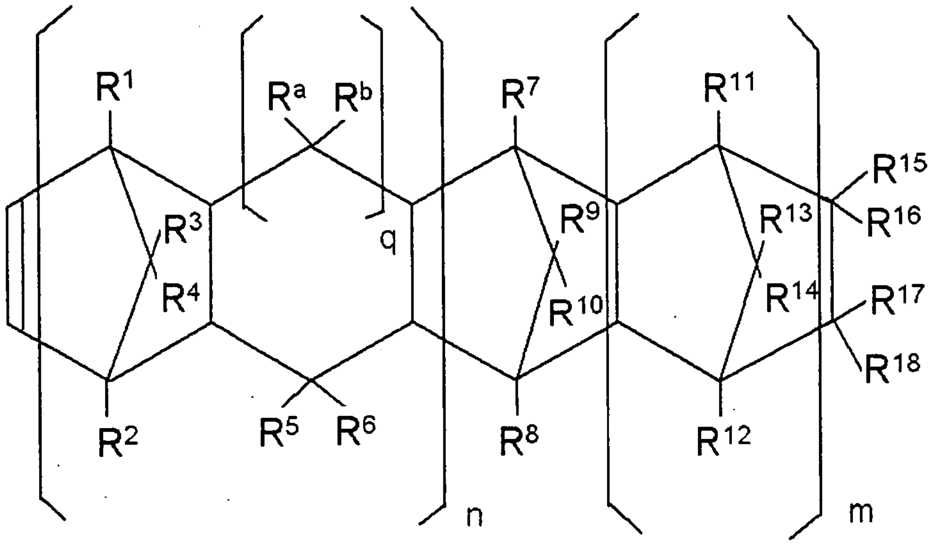

(1)

(In the formula (1), n is 0 or 1; m is 0 or a positive integer; q is 0 or 1, where if q is 0, the bonds are bound to each other to form a 5-membered ring, and if q is 1, $R^a$ and $R^b$ are each independently a hydrogen atom, a halogen atom, or a hydrocarbon group; and $R^1$ to $R^{18}$ are each independently a hydrogen atom, a halogen atom, or a hydrocarbon group, where the halogen atom in $R^1$ to $R^{18}$ and $R^a$ and $R^b$ is a fluorine atom, a chlorine atom, a bromine atom, or an iodine atom) ;

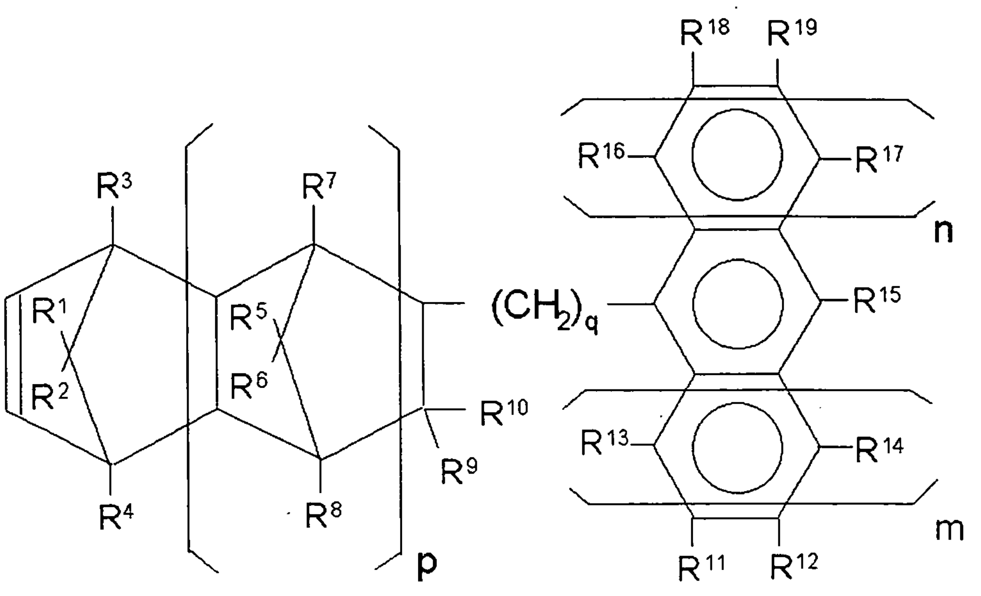

(2)

(In the formula (2), p and q are each 0 or a positive integer; m and n are each 0, 1, or 2; and $R^1$ to $R^{19}$ are each independently a hydrogen atom, a halogen atom, a hydrocarbon group, or an alkoxy group), in the presence of a polymerization catalyst containing a transition metal catalyst component and a co-catalyst component,

wherein in the process for producing a cyclic olefin random copolymer, at least one of the transition metal catalyst component and the co-catalyst component is brought into contact with the cyclic olefin (b), and then brought into contact with the ethylene (a).

[2] The process for producing a cyclic olefin random copolymer described in said [1], wherein at least one of the transition metal catalyst component and the co-catalyst component is brought into contact with the cyclic olefin (b)

in the presence of a hydrocarbon solvent.

[3] The process for producing a cyclic olefin random copolymer described in said [1] or [2], wherein at least one of the transition metal catalyst component and the co-catalyst component is brought into contact with the cyclic olefin (b), and then brought into contact with the ethylene (a) in the presence of a molecular weight regulator.

[4] The process for producing a cyclic olefin random copolymer described in any one of said [1] to [3], wherein the polymerization catalyst containing the transition metal catalyst component and the co-catalyst component is brought into contact with the cyclic olefin and then brought into contact with the ethylene.

[5] The process for producing a cyclic olefin random copolymer described in any one of said [1] to [4], wherein the transition metal catalyst component and the co-catalyst component are mixed and brought into contact with the cyclic olefin in a polymerization vessel first, and then the ethylene is fed into the polymerization vessel.

[6] The process for producing a cyclic olefin random copolymer described in said [5], wherein the reaction volume of said polymerization vessel is 100L or more.

[7] The process for producing a cyclic olefin random copolymer described in any one of said [1] to [6], wherein the copolymerization of the ethylene (a) with the cyclic olefin (b) is carried out in liquid phase including the hydrocarbon solvent.

[8] The process for producing a cyclic olefin random copolymer described in any one of [1] to [7], wherein the ethylene (a) is copolymerized with the cyclic olefin (b) by a continuous polymerization process.

[9] The process for producing a cyclic olefin random copolymer described in any one of said [1] to [8], wherein the cyclic olefin (b) is tetracyclo[4.4.0.$1^{2,5}$.$1^{7,10}$]-3-dodecene.

[10] A method for initiating polymerization of cyclic olefin random copolymer, in copolymerizing:

(a) ethylene; with

(b) at least one cyclic olefin selected from the group consisting of unsaturated monomers each represented by following general formula (1) or (2):

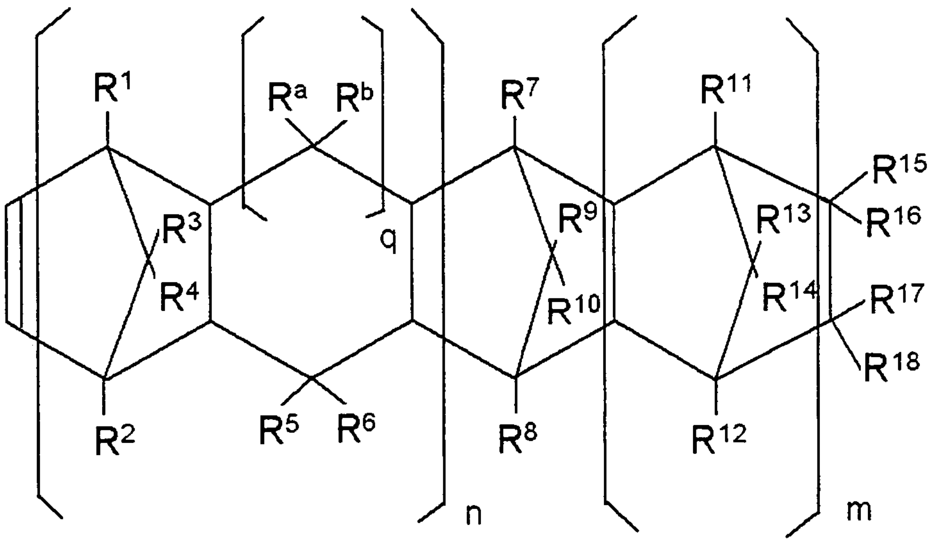

(1)

(In formula (1), n is 0 or 1; m is 0 or a positive integer; q is 0 or 1, where if q is 0, the bonds are bound to each other to form a 5-membered ring, and if q is 1, $R^a$ and $R^b$ are each independently a hydrogen atom, a halogen atom, or a hydrocarbon group; and $R^1$ to $R^{18}$ are each independently a hydrogen atom, a halogen atom, or a hydrocarbon group, where the halogen atom in $R^1$ to $R^{18}$ and $R^a$ and $R^b$ is a fluorine atom, a chlorine atom, a bromine atom, or an iodine atom);

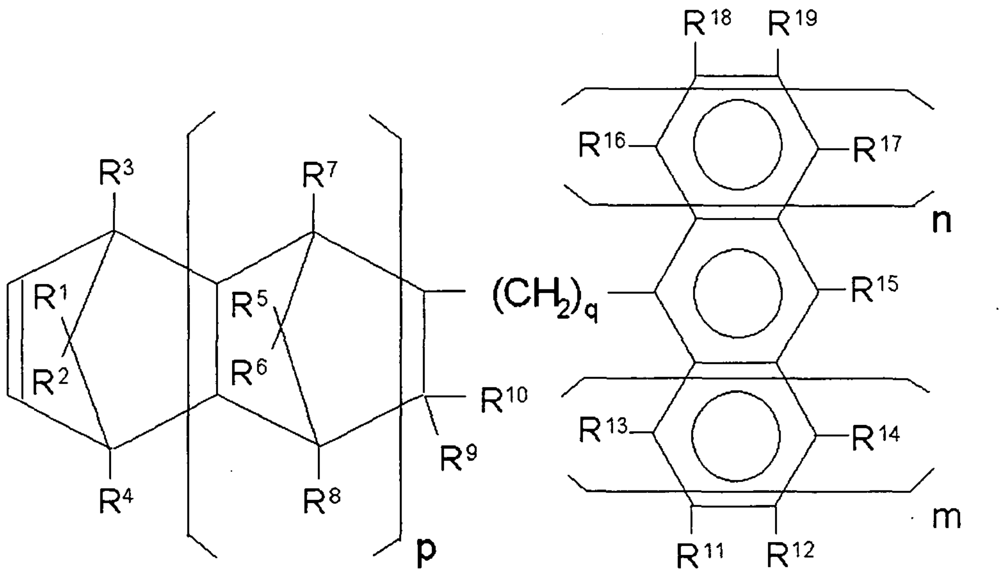

(2)

(In formula (2), p and q are each 0 or a positive integer; m and n are each 0, 1, or 2; and $R^1$ to $R^{19}$ are each independently a hydrogen atom, a halogen atom, a hydrocarbon group, or an alkoxy group), in the presence of a polymerization catalyst containing a transition metal catalyst component and a co-catalyst component,
wherein in the method for initiating polymerization of cyclic olefin random copolymer, the polymerization catalyst containing a transition metal catalyst component and a co-catalyst component is brought into contact with the cyclic olefin (b) first, and then brought into contact with the ethylene (b).

According to present invention, the content of polyethylene component included as an impurity can be reduced when producing a cyclic olefin random copolymer.

BEST MODE FOR CARRYING OUT THE INVENTION

Hereinafter, the process for producing a cyclic olefin random copolymer related to the invention will be explained in more detail.

[Cyclic Olefin]

First, the cyclic olefin represented by general formula (1) or (2) which can be employed in the invention will be explained.

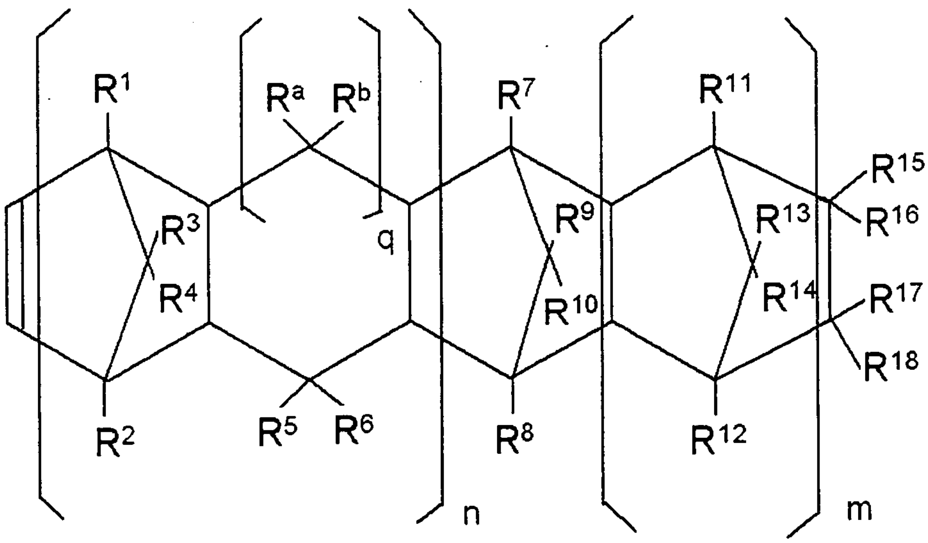

(1)

In above general formula (1), n is 0 or 1, m is 0 or a positive integer, and q is 0 or 1. Here, if q is 1, $R^a$ and $R^b$ are each independently an atom or a hydrocarbon group as described below; and if q is 0, the bonds are bound to each other to form a 5-membered ring.

$R^1$ to $R^{18}$ and $R^a$ and $R^b$ are each independently a hydrogen atom, a halogen atom, or a hydrocarbon group. Here, the halogen atom is a fluorine atom, a chlorine atom, a bromine atom, or an iodine atom.

For the hydrocarbon group, typically an alkyl group having 1 to 20 carbon atom(s), a cycloalkyl group having 3 to 15 carbon atoms, or an aromatic hydrocarbon group may be mentioned for each independently. More specifically, the alkyl group may be exemplified by a methyl group, an ethyl group, a propyl group, an isopropyl group, an amyl group, a hexyl group, an octyl group, a decyl group, a dodecyl group, or an octadecyl group. The cycloalkyl group may be exemplified by a cyclohexyl group, while the aromatic hydrocarbon group may be exemplified by a phenyl group, a naphthyl group, or the like.

These hydrocarbon groups may be substituted with halogen atoms. Moreover, in the general formula (1), $R^{15}$ to $R^{18}$ may be bound to each other, that is, may be in cooperation with each other, to form a monocyclic ring or a polycyclic ring, and also, the monocyclic ring or polycyclic ring thus formed may have double bonds. Specific examples of the formed monocyclic ring or polycyclic ring will be presented in the following.

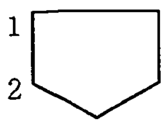
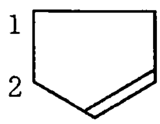
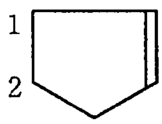
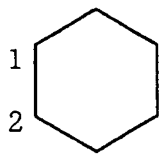
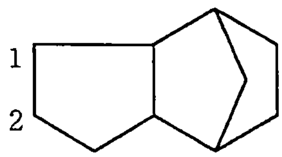

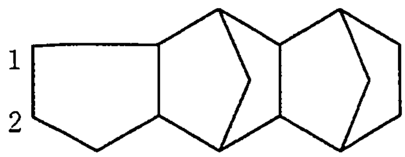
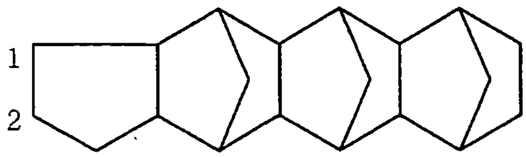

With regard to the illustration above, the carbon atoms assigned with number 1 or 2 represent the carbon atoms to which $R^{15}$ ($R^{16}$) or $R^{17}$ ($R^{18}$) of the general formula (1) is bound, respectively. Furthermore, $R^{15}$ and $R^{16}$, or $R^{17}$ and $R^{18}$ may form an alkylidene group. Such alkylidene group is typically an alkylidene group having 2 to 20 carbon atoms, and specific examples of this alkylidene group include an ethylidene group, a propylidene group, and an isopropylidene group.

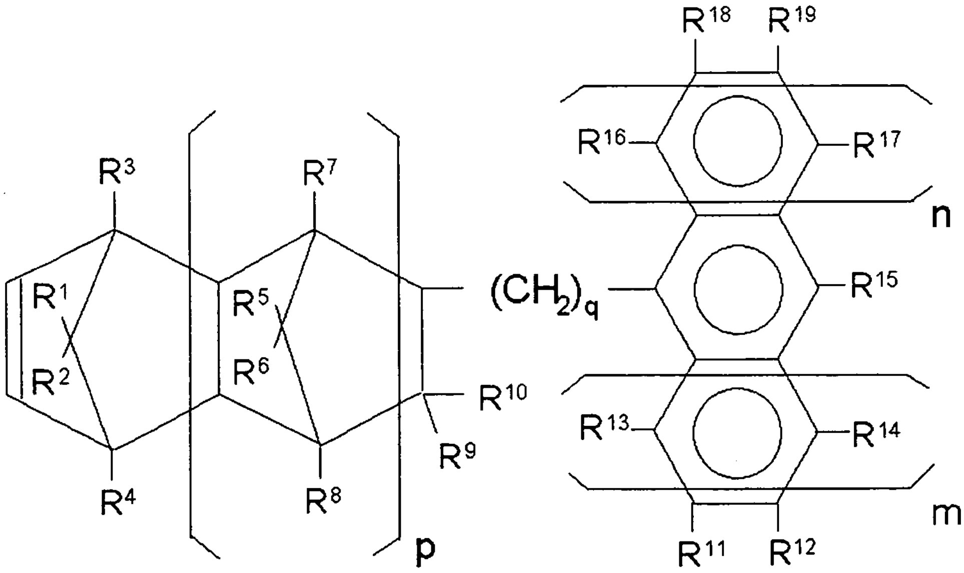

(2)

In general formula (2), p and q are each 0 or a positive integer, while m and n are each 0, 1, or 2. $R^1$ to $R^{19}$ are each independently a hydrogen atom, a halogen atom, a hydrocarbon group, or an alkoxy group.

The halogen atom has the same meaning as the halogen atoms defined for the above general formula (1). The hydrocarbon group may be exemplified by an alkyl group having 1 to 20 carbon atom(s), a halogenated alkyl group having 1 to 20 carbon atom(s), a cycloalkyl group having 3 to 15 carbon atoms, or an aromatic hydrocarbon group, for each independently. More specifically, the alkyl group may be exemplified by a methyl group, an ethyl group, a propyl group, an isopropyl group, an amyl group, a hexyl group, an octyl group, a decyl group, a dodecyl group, or an octadecyl group. The cycloalkyl group may be exemplified by a cyclohexyl group, while the aromatic hydrocarbon group may be exemplified by an aryl group or an aralkyl group, specifically, a phenyl group, a tolyl group, a naphthyl group, a benzyl group, a phenylethyl group, or the like.

The alkoxy group may be exemplified by a methoxy group, an ethoxy group, a propoxy group, or the like. These hydrocarbon groups and alkoxy groups may be substituted with a fluorine atom, a chlorine atom, a bromine atom, or an iodine atom.

Here, the carbon atom to which $R^9$ and $R^{10}$ are bound, and the carbon atom to which $R^{13}$ is bound or the carbon atom to which $R^{11}$ is bound may be bound, directly or via an alkylene group having 1 to 3 carbon atom(s). That is, in the case where the two carbon atoms mentioned above are bound via an alkylene group, the groups represented by $R^9$ and $R^{13}$, or the groups represented by $R^{10}$ and $R^{11}$ are joined to each other to form any alkylene group among a methylene group ($-CH_2-$), an ethylene group ($-CH_2CH_2-$), and a propylene group ($-CH_2CH_2CH_2-$) .

Furthermore, when n = m = 0, $R^{15}$ and $R^{12}$, or $R^{15}$ and $R^{19}$ may be bound to each other to form a monocyclic or polycyclic aromatic ring. The monocyclic or polycyclic aromatic ring in this case may be exemplified by the following groups in which when n = m = 0, $R^{15}$ and $R^{12}$ are further forming aromatic rings.

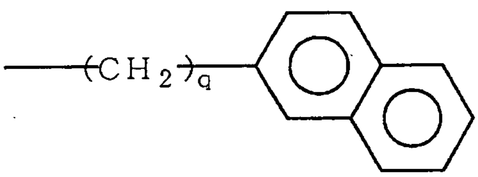

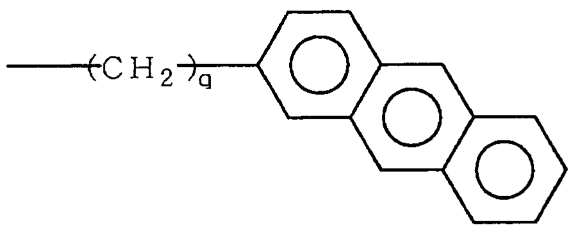

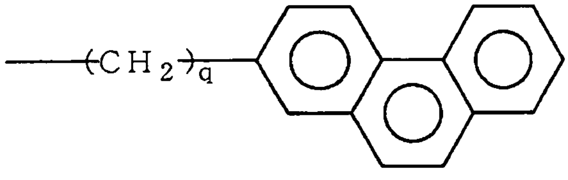

In these formulae, q has the same meaning as the q in the general formula (2).

More specific examples of the cyclic olefin represented by general formula (1) or general formula (2) as described above are as follows.

First, bicyclo[2.2.1]-2-heptene represented by the following structural formula which is also known as norbornene (in the structural formula, the numbers 1 to 7 represent the location numbers of carbon atoms), and derivatives resulting from substitution of the compound represented by the structural formula with hydrocarbon groups may be mentioned.

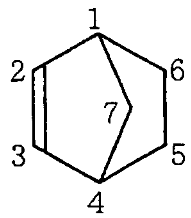

Examples of these hydrocarbon groups include 5-methyl, 5,6-dimethyl, 1-methyl, 5-ethyl, 5-n-butyl, 5-isobutyl, 7-methyl, 5-phenyl, 5-methyl-5-phenyl, 5-benzyl, 5-tolyl, 5-(ethylphenyl), 5-(isopropylphenyl), 5-(biphenyl), 5-(β-naphthyl), 5-(α-naphthyl), 5-(anthracenyl), and 5,5-diphenyl.

As other derivatives, bicyclo[2.2.1]-2-heptene derivatives such as a cyclopentadiene-acenaphthylene adduct, 1,4-methano-1,4,4a,9a-tetrahydrofluorene, and 1,4-methano-1,4,4a,5,10,10a-hexahydroanthracene may be mentioned.

In addition to these, tricyclo[4.3.0.$1^{2,5}$]-3-decene derivatives such as tricyclo[4.3.0.$1^{2,5}$]-3-decene, 2-methyltricyclo[4.3.0.$1^{2,5}$]-3-decene, and 5-methyltricyclo[4.3.0.$1^{2,5}$]-3-decene, and tricyclo[4.4.0.$1^{2,5}$]-3-undecene derivatives such as tricyclo[4.4.0.$1^{2,5}$]-3-undecene and 10-methyltricyclo[4.4.0.$1^{2,5}$]-3-undecene may be mentioned.

In addition, tetracyclo [4.4.0.$1^{2,5}$.$1^{7,10}$]-3-dodecene represented by the following structural formula and derivatives resulting from substitution of this compound with hydrocarbon groups may be mentioned.

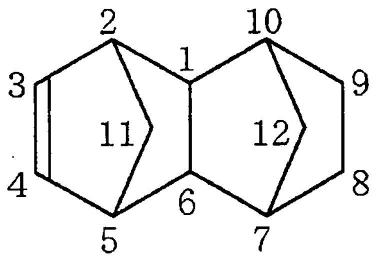

Examples of these hydrocarbon groups include 8-methyl, 8-ethyl, 8-propyl, 8-butyl, 8-isobutyl, 8-hexyl, 8-cyclohexyl, 8-stearyl, 5,10-dimethyl, 2,10-dimethyl, 8,9-dimethyl, 8-ethyl-9-methyl, 11,12-dimethyl, 2,7,9-trimethyl, 2,7-dimethyl-9-ethyl, 9-isobutyl-2,7-dimethyl, 9,11,12-trimethyl, 9-ethyl-11,12-dimethyl, 9-isobutyl-11,12-dimethyl, 5,8,9,10-tetramethyl, 8-ethylidene, 8-ethylidene-9-methyl, 8-ethylidene-9-ethyl, 8-ethylidene-9-isopropyl, 8-ethylidene-9-butyl, 8-n-propylidene, 8-n-propylidene-9-methyl, 8-n-propylidene-9-ethyl, 8-n-propylidene-9-isopropyl, 8-n-propylidene-9-butyl, 8-isopropylidene, 8-isopropylidene-9-methyl, 8-isopropylidene-9-ethyl, 8-isopropylidene-9-isopropyl, 8-isopropylidene-9-butyl, 8-chloro, 8-bromo, 8-fluoro, 8,9-dichloro, 8-phenyl, 8-methyl-8-phenyl, 8-benzyl, 8-tolyl, 8-(ethylphenyl), 8-(isopropylphenyl), 8,9-diphenyl, 8-(biphenyl), 8-(β-naphthyl), 8-(α-naphthyl), 8-(anthracenyl), 5,6-diphenyl, and the like.

In addition, tetracyclo[4.4.0.$1^{2,5}$.$1^{7,10}$]-3-dodecene derivatives such as adducts of cyclopentadiene-acenaphthylene and cyclopentadiene; pentacyclo [6.5.1.$1^{3,6}$.$0^{2,7}$.$0^{9,13}$] -4-pentadecene and derivatives thereof; pentacyclo [7.4.0.$1^{2,5}$.$1^{9,12}$.$0^{8,13}$]-3-pentadecene, and derivatives thereof;

pentacyclo [8.4.0.$1^{2,5}$.$1^{9,12}$.$0^{8,13}$]-3-hexadecene and derivatives thereof; pentacyclo[6.6.1.$1^{3,6}$.$0^{2,7}0^{9,14}$]-4-hexadecene and derivatives thereof;

hexacyclo[6.6.1.$1^{3,6}$.$1^{10,13}$.$0^{2,7}$.$0^{9,14}$]-4-heptadecene and derivatives thereof; heptacyclo[8.7.0.$1^{2,9}$.$1^{4,7}$.$1^{11,17}$.$0^{3,8}$.$0^{12,16}$]-5-eicosene and derivatives thereof;

heptacyclo [8.7.0.$1^{3,6}$.$1^{10,17}$.$1^{12,15}$.$0^{2,7}$.$0^{11,16}$]-4-eicosene and derivatives thereof;

heptacyclo [8.8.0.$1^{2,9}$.$1^{4,7}$.$1^{11,18}$.$0^{3,8}$.$0^{12,17}$]-5-heneicosene and derivatives thereof;
octacyclo [8.8.0.$1^{2,9}$.$1^{4,7}$.$1^{11,18}$.$1^{13,16}$.$0^{3,8}$.$0^{12,17}$]-5-docosene and derivatives thereof;
nonacyclo[10.9.1.$1^{4,7}$.$1^{13,20}$.$1^{15,18}$.$0^{2,10}$.$0^{3,8}$.$0^{12,21}$.$0^{14,19}$]-5-pentacosene and derivatives thereof; and the like may be mentioned.

For the cyclic olefin used as the raw material of a random copolymer of ethylene and cyclic olefin, said tetracyclo [4.4.0.$1^{2,5}$.$1^{7,10}$]-3-dodecene and derivatives resulting from substitution of this compound with hydrocarbon groups may be preferably mentioned, and tetracyclo [4.4.0.$1^{2,5}$.$1^{7,10}$]-3-dodecene is particularly preferably mentioned, from the viewpoints of heat resistance and easy availability.

Specific examples of the cyclic olefin represented by said general formula (1) or general formula (2) which can be used for the invention have been presented in the above, but more specific structural examples of these compounds may be exemplified by the structural examples of the cyclic olefins shown in Paragraphs [0032] to [0054] in the specification of JP-A No. 7-145213. Those exemplified compounds may be used as the cyclic olefin for the invention of the present application.

The cyclic olefin represented by the general formula (1) or general formula (2) as described above can be produced by subjecting cyclopentadiene and olefins having the corresponding structures to a Diels-Alder reaction.

These cyclic olefins may be used either singly or in combination of two or more kinds in the process for producing a cyclic olefin random copolymer of the invention.

[Process for producing Cyclic Olefin Random Copolymer]

The process for producing a cyclic olefin random copolymer of the invention is a method which includes bringing at least one of a transition metal catalyst component and a co-catalyst component into contact with a cyclic olefin and then bringing into contact with ethylene, when producing a cyclic olefin random copolymer by copolymerizing the ethylene with the cyclic olefin represented by above general formula (1) or general formula (2) in the presence of a polymerization catalyst containing the transition metal catalyst component and the co-catalyst component.

[Polymerization Catalyst]

For the polymerization catalyst used in the process for producing a cyclic olefin random copolymer of the invention, a polymerization catalyst containing a transition metal catalyst component and a co-catalyst component can be used. As the transition metal catalyst component, a vanadium catalyst component composed of a vanadium compound soluble in a hydrocarbon solvent or a Group IVB metallocene catalyst component is preferably employed.

For the co-catalyst component, an ionizing ionic compound which reacts with an organoaluminum compound, an organoaluminumoxy compound, or a transition metal catalyst component to form an ion pair, can be employed.

In the process for producing a cyclic olefin random copolymer of the invention, a combination of a vanadium catalyst component composed of a vanadium compound soluble in a hydrocarbon solvent and an organoaluminum compound, or a combination of a Group IVB metallocene catalyst component, an organoaluminumoxy compound, and if necessary, an organoaluminum compound, can be used.

[Transition Metal Catalyst Component]

As the vanadium compound soluble in a hydrocarbon solvent, specifically a vanadium compound represented by the following general formula (3) or an electron-donor adduct thereof can be employed.

$$VO(OR)_aX_b \text{ or } V(OR)_cX_d \qquad (3)$$

(In the general formula (3), R is a hydrocarbon group, and $0 \leq a \leq 3$, $0 \leq b \leq 3$, $2 \leq a+b \leq 3$, $0 \leq c \leq 4$, $0 \leq d \leq 4$, $3 \leq c+d \leq 4$ are satisfied)

More specifically, the vanadium compounds represented by $VOCl_3$, $VO(OC_2H_5)Cl_2$, $VO(OC_2H_5)_2Cl$, VO(O-iso-$C_3H_7$)$Cl_2$, VO(O-n-$C_4H_9$)$Cl_2$, $VO(OC_2H_5)_3$, $VOBr_2$, $VCl_4$, $VOCl_2$VO(O-n-$C_4H_9$)$_3$, $VOCl_3 \cdot 2OC_8H_{17}OH$ can be exemplified.

The electron donor which may be employed in preparing an adduct of electron donor of the soluble vanadium compound may be mentioned by alcohols, phenols, ketones, aldehydes, carboxylic acids, organic acid halides, organic acid esters or inorganic acid esters, ethers, diethers, acid amides, acid anhydrides, oxygen-containing electron donors such as alkoxysilane, ammonias, amines, nitriles, pyridines, and nitrogen-containing electron donors such as isocyanates.

More specific examples include:

alcohols having 1 to 18 carbon atom(s) such as methanol, ethanol, propanol, butanol, pentanol, hexanol, 2-ethylhexanol, octanol, dodecanol, octadecyl alcohol, oleyl alcohol, benzyl alcohol, phenylethyl alcohol, and cumyl alcohol, isopropyl alcohol and isopropyl benzyl alcohol;
halogen-containing alcohols having 1 to 18 carbon atom (s) such as trichloromethanol, trichloroethanol, and trichlorohexanol;
phenols having 6 to 20 carbon atoms which optionally have lower alkyl groups, such as phenol, cresol, xylenol, ethylphenol, propylphenol, nonylphenol, cumylphenol, and naphthol;
ketones having 3 to 15 carbon atoms such as acetone, methyl ethyl ketone, methyl isobutyl ketone, acetophenone, benzophenone, and benzoquinone;
aldehydes having 2 to 15 carbon atoms such as acetoaldehyde, propionaldehyde, octylaldehyde, benzaldehyde, tolualdehyde, and naphthoaldehyde;
organic acid esters having 2 to 18 carbon atoms such as methyl formate, methyl acetate, ethyl acetate, vinyl acetate, propyl acetate, octyl acetate, cyclohexyl acetate, ethyl propionate, methyl butyrate, ethyl valerate, methyl chloroacetate, ethyl dichloroacetate, methyl methacrylate, ethyl crotonate, ethyl cyclohexane carboxylate, methyl benzoate, ethyl benzoate, propyl benzoate, butyl benzoate, octyl benzoate, cyclohexyl benzoate, phenyl benzoate, benzyl benzoate, methyl toluate, ethyl toluate, amyl toluate, ethyl ethylbenzoate, methyl anisate, ethyl anisate, ethyl ethoxybenzoate, γ-butyrolactone, δ-valerolactone, coumalin, phthalide, and ethyl carbonate;
halides having 2 to 15 carbon atoms such as acetyl chloride, benzoyl chloride, toluic acid chloride, and anisic acid chloride;
ethers having 2 to 20 carbon atoms such as methyl ether, ethyl ether, isopropyl ether, butyl ether, amyl ether, tetrahydrofuran, anisole, and diphenyl ether;
acid anhydrides such as acetic anhydride, phthalic anhydride, and benzoic anhydride;
alkoxysilanes such as ethyl silicate and diphenyl dimethoxy silane;
acid amides such as acetic acid N, N-dimethylamide, benzoic acid N,N-diethylamide, toluic acid N,N-dimethylamide;
amines such as trimethyl amine, triethyl amine, tributyl amine, tribenzyl amine, and tetramethylethylene diamine;
nitriles such as acetonitrile, benzonitrile, and trinitrile;
pyridines such as pyridine, methylpyridine, ethylpyridine, and dimethylpyridine; and the like. These electron donors can be used either singly or in combination of two or more kinds.

The Group IVB metallocene catalyst component is a transition metal compound which includes a ligand having cyclopentadienyl skeleton.
Here, transition metals of Group IVB may be mentioned by zirconium, titanium, or hafnium, and these transition metals each have at least one ligand having cyclopentadienyl skeleton. Examples of the ligand having cyclopentadienyl skeleton include optionally alkyl group-substituted cyclopentadienyl group and indenyl group, a tetrahydroindenyl group, and a fluorenyl group. These groups may be bonded via other group such as an alkylene group. Ligands other than the ligand having cyclopentadienyl skeleton may be mentioned by an alkyl group, a cycloalkyl group, an aryl group, an aralkyl group, or the like. Such IVB Group metallocene catalysts are disclosed in, for example, JP-A No. 61-221206, JP-A No. 64-106, JP-A No. 2-173112, and the like.

[Co-catalyst Component]

As the organoaluminum compound, a compound having at least one Al-C bond in the molecule can be employed. For example, an organoaluminum compound represented by the following general formula (4) can be exemplified.
$$R^1_nAlX_{3-n} \qquad (4)$$

(In the formula, $R^1$ is a hydrocarbon group having 1 to 12 carbon atom(s), X is a halogen atom or a hydrogen atom, and n is 1 to 3)
In the above general formula (4), $R^1$ is a hydrocarbon group having 1 to 12 carbon atom(s) such as an alkyl group, a cycloalkyl group, or an aryl group, specifically a methyl group, an ethyl group, an n-propyl group, an isopropyl group, an isobutyl group, a pentyl group, a hexyl group, an octyl group, a cyclopentyl group, a cyclohexyl group, a phenyl group, a tolyl group, or the like.
As such organoaluminum compound, specifically the following compounds can be employed. Those which may be employed include:

trialkylaluminum such as trimethylaluminum, triethylaluminum, triisopropylaluminum, triisobutylaluminum, trioctylaluminum, and tri(2-ethylhexyl)aluminum;

alkenylaluminum such as isoprenylaluminum;
dialkylaluminum halide such as dimethylaluminum chloride, diethylaluminum chloride, diisopropylaluminum chloride, diisobutylaluminum chloride, and dimethylaluminum bromide;
alkylaluminum sesquihalide such as methylaluminum sesquichloride, ethylaluminum sesquichloride, isopropylaluminum sesquichloride, butylaluminum sesquichloride, and ethylaluminum sesquibromide;
alkyaluminum dihalide such as methylaluminum dichloride, ethylaluminum dichloride, isopropylaluminium dichloride, and ethylaluminium dibromide;
alkylaluminum hydride such as diethylaluminum hydride and diisobutylaluminum hydride; and the like.

Also, as the organoaluminum compound, compounds represented by the following general formula (5) can be employed.
$$R^1_nAlY_{3-n} \qquad (5)$$

(In the formula, $R^1$ has the same meaning as defined above; Y is $-OR^2$ group, $-OSiR^3_3$ group, $-OAlR^4_2$ group, $-NR^5_2$ group, $-SiR^6_3$ group, or $-N(R^7)AlR^8_2$ group; n is 1 or 2; $R^2$, $R^3$, $R^4$, and $R^8$ are each a methyl group, an ethyl group, an isopropyl group, an isobutyl group, a cyclohexyl group, a phenyl group, or the like; $R^5$ is a hydrogen atom, a methyl group, an ethyl group, an isopropyl group, a phenyl group, a trimethylsilyl group, or the like; and $R^6$ and $R^7$ are each a methyl group, an ethyl group, or the like)
As such organoaluminum compound, specifically the following compounds can be employed:
(i) compounds represented by $R^1_nAl(OR^2)_{3-n,}$ such as dimethylaluminum methoxide, diethylaluminum ethoxide, or diisobutylaluminum methoxide;
(ii) compounds represented by $R^1_nAl(OSiR^3_3)_{3-n,}$ such as $Et_2Al(OSiMe_3)$, (iso-Bu)$_2$Al($OSiMe_3$), or (iso-Bu)$_2$Al ($OSiEt_3$);
(iii) compounds represented by $R^1_nAl(OAlR^4_2)_{3-n}$, such as $Et_2AlOAlEt_2$ or (iso-Bu)$_2$AlOAl(iso- Bu)$_2$;
(iv) compounds represented by $R^1_nAl(NR^5_2)_{3-n}$, such as $Me_2AlNEt_2$, $Et_2AlNHMe$, $Me_2AlNHEt$, $Et_2AlN(SiMe_3)_2$, or (iso-Bu)$_2$AlN($SiMe_3$)$_2$;
(v) compounds represented by $R^1_nAl(SiR^6_3)_{3-n,}$ such as (iso-Bu)$_2$AlSi$Me_3$;
(vi) compounds represented by $R^1_nAl(N(R^7)AlR^8_2)_{3-n})$, such as $Et_2AlN(Me)AlEt_2$ or (iso-Bu)$_2$AlN(Et)Al(iso-Bu)$_2$; or the like.

Among these, alkylaluminum halide, alkylaluminumdihalide, or a mixture thereof is particularly preferable.
In addition, the organoaluminumoxy compound may be traditionally known aluminoxane, or benzene-insoluble organoaluminumoxy compounds as exemplified in JP-A No. 2-78687.
The traditionally known aluminoxane can be prepared by the following procedures.
(i) A procedure for recovering aluminoxane as its solution in hydrocarbon which comprises reacting an organoaluminum compound such as trialkylaluminum with a suspension in a hydrocarbon medium of a compound having adsorbed water or a salt containing crystallization water, for example, hydrates of magnesium chloride, copper sulfate, aluminum sulfate, nickel sulfate, or cerium(I) chloride.
(ii) A procedure for recovering aluminoxane as its solution in hydrocarbon which comprises allowing water, ice, or water vapor to directly react with an organoaluminum compound such as trialkylaluminum in a solvent such as benzene, toluene, ethyl ether, and tetrahydrofuran.
(iii) A procedure which comprises allowing an organotin oxide such as dimethyltin oxide and dibutyltin oxide to react with an organoaluminum compound such as trialkylaluminum in a solvent such as decane, benzene, and toluene.
The aluminoxane may contain a small amount of organometal components. Moreover, the solvent or the organoaluminum compound which has not reacted may be removed by distillation from the recovered solution of aluminoxane described above, and the resultant product may be redissolved in a solvent.
Specific examples of the organoaluminum compounds used for preparing such aluminoxane as mentioned above include:

trialkylaluminum such as trimethylaluminum, triethylaluminum, tripropylaluminum, triisopropylaluminum, tri-n-butylaluminum, triisobutylaluminum, tri-sec-butylaluminum, tri-tert-butylaluminum, tripentylaluminum, trihexylaluminum, trioctylaluminum, and tridecylaluminum;
tricycloalkylaluminum such as tricyclohexylaluminum and tricyclooctylaluminum;
dialkylaluminum halides such as dimethylaluminum chloride, diethylaluminum chloride, diethylaluminum bromide, and diisobutylaluminum chloride;

dialkylaluminum hydrides such as diethylaluminum hydride and diisobutylaluminum hydride;
dialkylaluminum alkoxides such as dimethylaluminum methoxide and diethylaluminum ethoxide;
dialkylaluminum aryloxides such as diethylaluminum phenoxide; and the like.

Of the organoaluminum compounds as exemplified above, trialkylaluminum is preferably used. Furthermore, isoprenylaluminum represented by the following general formula (6) may also be used as the organoaluminum compound.
$$(i\text{-}C_4H_9)_xAl_y(C_5H_{10})_z \qquad (6)$$

(In the general formula (6), x, y, and z, are each a positive number, and $z \geq 2x$ is satisfied)
The organoaluminum compounds mentioned above may be used either singly or in combination.
Solvents used in preparing the aluminoxane include aromatic hydrocarbons such as benzene, toluene, xylene, cumene, and cymene; aliphatic hydrocarbons such as pentane, hexane, heptane, octane, decane, dodecane, hexadecane, and octadecane; alicyclic hydrocarbons such as cyclopentane, cyclohexane, cyclooctane, and methylcyclopentane; petroleum fractions such as gasoline, kerosene, and gas oil; and halides, particularly chlorides and bromides, of the above-mentioned aromatic, aliphatic, and alicyclic hydrocarbons. In addition to these, ethers such as ethyl ether and tetrahydrofuran may also be used. Of these solvents, particularly preferred are aromatic hydrocarbons.
The benzene-insoluble organoaluminumoxy compound used in the invention can be prepared, for example, by a procedure which comprises bringing a solution of aluminoxane into contact with water or an active hydrogen-containing compound, or a procedure which comprises bringing the organoaluminum compound as described above into contact with water. The benzene-insoluble organoaluminumoxy compounds contain an Al component, which dissolves in benzene at 60°C, in an amount of usually up to 10%, preferably up to 5%, and particularly preferably up to 2% in terms of Al atom, and they are insoluble or sparingly soluble in benzene.
The organoaluminumoxy compounds described above are usually commercially available as or handled as a toluene solution. The organoaluminumoxy compound used in the invention may contain a small amount of organic compound component of metal other than aluminum.
The ionizing ionic compound is a compound which reacts with said transition metal catalyst component to form an ion pair, and the compound can be exemplified by Lewis acids, ionic compounds, borane compounds, carborane compounds, or the like disclosed in JP-A No. 1-501950, JP-A No. 1-502036, JP-A No. 3-179005, JP-A No. 3-179006, JP-A No. 3-207703, and JP-A No. 3-207704.
In the invention, a catalyst composed of a soluble vanadium compound and an organoaluminum compound can be preferably used in copolymerizing ethylene with said cyclic olefin.
In the invention, a hydrocarbon solvent can be also used in copolymerizing ethylene with the cyclic olefin mentioned above. Examples of the hydrocarbon solvent include: aliphatic hydrocarbons such as pentane, hexane, heptane, octane, decane, dodecane, and kerosene, and halogen derivatives thereof; alicyclic hydrocarbons such as cyclohexane, methylcyclopentane, and methylcyclohexane, and halogen derivatives thereof; and aromatic hydrocarbons such as benzene, toluene, and xylene, and halogen derivatives thereof such as chlorobenzene.
The process for producing a cyclic olefin random copolymer of the invention is characterized in that at least one component of said transition metal catalyst component and said co-catalyst component is brought into contact with a cyclic olefin, and then brought into contact with ethylene, and particularly preferably the transition metal catalyst component and co-catalyst component are brought into contact with a cyclic olefin and then brought into contact with ethylene. According to such method, with a simple procedure, the production of polyethylene component can be effectively prevented and the polyethylene component contained in the cyclic olefin random copolymer can be reduced.
On this occasion, the co-catalyst component may be preliminarily brought into contact with the transition metal catalyst component and thereafter charged into a polymerization reaction vessel so as to be mixed and brought into contact with a cyclic olefin, or alternatively the co-catalyst component may be first charged into a polymerization reaction vessel so as to be mixed and brought into contact with a cyclic olefin and thereafter brought into contact with the transition metal catalyst component.
The cyclic olefin random copolymer of the invention can be produced with the use of a polymerization vessel. The polymerization vessel is equipped with a stirrer, a recycle line which extracts the polymerization reaction solution from the bottom of the vessel and recycles into the vessel, and a recycle pump provided in the recycle line. The reaction volume of the polymerization vessel used in the invention can be 100L or more.
When the reaction volume of the polymerization vessel is 100L or more, the productivity of cyclic olefin random copolymer is excellent as compared to the case where a polymerization vessel having a few liter, that is in the scale of laboratory use is employed.
However, ethylene hardly uniformly disperses in a polymerization reaction system and it takes a while to be uniformly dispersed, thus the ethylene remains in an ununiform state in a polymerization reaction solution for a predetermined period. Therefore, highly reactive ethylenes react with each other and the production of polyethylene component, that is the impurity, tends to be significant.

On the other hand, since at least one of the transition metal catalyst component and the co-catalyst component is preliminarily brought into contact with a cyclic olefin according to the invention, the reaction between ethylene and the cyclic olefin is relatively promoted. Therefore, even if in a case where a reaction vessel having a reaction volume of 100L or more is used, the production of polyethylene component, that is the impurity, is prevented and at the same time an excellent cyclic olefin random copolymer productivity is exhibited according to the invention.

In the production of a cyclic olefin random copolymer with the use of a polymerization vessel, the process of contacting the transition metal catalyst component, co-catalyst component, and the cyclic olefin can be performed either in a pipe for feeding each component to a polymerization vessel or in a polymerization vessel, but preferably performed in a polymerization vessel.

More specifically, the cyclic olefin is preliminarily charged into a polymerization vessel before charging the polymerization catalyst component according to the invention, and the cyclic olefin is preferably co-existed with a hydrocarbon solvent. For the hydrocarbon solvent, any of chained hydrocarbon and cyclic hydrocarbon can be used, but preferred is saturated hydrocarbon such as aliphatic hydrocarbon and particularly preferred is cyclic aliphatic hydrocarbon. The cyclic aliphatic hydrocarbon can be exemplified by cyclopentane, cyclohexane, or the like, and particularly preferred is cyclohexane. The mixing ratio of the cyclic olefin to the hydrocarbon solvent which to be preliminarily charged into a polymerization vessel, represented by cyclic olefin/hydrocarbon solvent (volume ratio), is in the range of 1/100 to 100/0, preferably 2/100 to 30/100.

It is necessary that the charge of ethylene into a polymerization vessel is carried out after sufficiently mixing and bringing the transition metal catalyst component, the co-catalyst component, and the cyclic olefin into contact with each other. The charge of ethylene is preferably started 30 seconds or more than 30 seconds after, further 10 minutes or more than 10 minutes after the contact between the transition metal catalyst component, co-catalyst component, and cyclic olefin is brought. By start charging the ethylene, the copolymerization of cyclic olefin with ethylene is initiated.

For the process for producing a cyclic olefin random copolymer of the invention, any of a batch polymerization process and a continuous polymerization process including successively charging monomers and a catalyst in a polymerization vessel and continuously taking out the polymer-containing solution may be employed, but the continuous polymerization process is preferably employed from the viewpoint of obtaining a polymer with a uniform composition.

The continuous polymerization process usually exhibits an excellent productivity as compared to the batch polymerization process, but problems generated by a polyethylene component become significant.

That is, in the continuous polymerization process, a polyethylene component produced in a polymerization reaction system adheres on an inner wall of the polymerization vessel or inside the transport pipe for the polymerization solution. When the adhered polyethylene component is detached from the inner wall of the polymerization vessel or inside the transport pipe and mixed in the polymerization solution, the polymerization reaction system will be eventually contaminated over a long period of time by the polyethylene component. If the detachment of the polyethylene component is only occasionally occurred, the trouble may not be detected by a random product inspection.

On the other hand, according to the production method of the invention, the production of polyethylene component can be reduced to its minimum even in the case of employing a continuous polymerization process, and further a continuous production over a long period of time becomes possible and also the excellent productivity is exhibited.

Accordingly, the content of the polyethylene component included in a cyclic olefin random copolymer as the impurity can be reduced, and a cyclic olefin random copolymer excellent in transparency can be produced. Moreover, adherence of the polyethylene component near around the orifice for extracting a copolymer-containing solution from an inner wall of the polymerization vessel and the polymerization vessel can be efficiently prevented.

Further, since the production of polyethylene component insoluble in a solvent used in the polymerization is prevented according to the invention when copolymerizing the ethylene with a specific cyclic olefin, the filter clogging is less likely occurred during the filtration of a polymer-containing solution and a continuous polymerization can be stably driven. In addition, if a cyclic olefin copolymer obtained by the production method of the invention is used as the substrate for an optical disc, a reading error caused by the substrate can be reduced.

For the invention, the ratio ($C_{0A1}/C_{1A1}$) of the concentration mol/L ($C_{0A1}$) of an organoaluminum compound to be fed into the polymerization vessel to the concentration mol/L ($C_{1A1}$) of an organoaluminum compound in the polymerization vessel is 50 or less, preferably 1 or more to 40 or less, and more preferably 1 or more to 30 or less. In addition, the ratio ($C_{0V}/C_{1V}$) of the concentration mol/L ($C_{0V}$) of a vanadium compound to be fed into the polymerization vessel to the concentration mol/L ($C_{1V}$) of a vanadium compound in the polymerization vessel is 10 or less, preferably 1 or more to 8 or less, and more preferably 1 or more to 6 or less.

The soluble vanadium compound and organoaluminum compound are usually diluted with said hydrocarbon solvent, pentacyclopentadecenes, or aromatic cyclic olefins, so as to be fed into a polymerization vessel.

It is desirable that the ratio (Al/V) of the aluminum atom to the vanadium atom in a polymerization reaction system is in the range of 2 or more, preferably 2 or more to 50 or less, and particularly preferably 3 or more to 20 or

less. Also, the concentration of the soluble vanadium compound in a copolymerization reaction system upon producing a cyclic olefin random copolymer is in the range of usually 0.01 or more to 5 or less gram atom/L-hydrocarbon solvent and preferably 0.05 or more to 3 or less gram atom/L-hydrocarbon solvent, in terms of the vanadium atom.

Such copolymerization reaction of ethylene with cyclic olefin is carried out at a temperature between -50°C or more and 100°C or less, preferably -30°C or more and 80°C or less, and more preferably -20°C or more and 60°C or less.

The reaction time when carrying out the such aforementioned copolymerization (an average retention time of a polymerization reaction mixture in case of a continuous polymerization reaction) varies depending on the type of polymerization starting material, type of catalyst component to be used, and the polymerization temperature, but usually is in the range of 5 minutes or more to 5 hours or less, and preferably 10 minutes or more to 3 hours or less. The pressure when carrying out the copolymerization reaction is usually greater than 0 MPa or more to 5 MPa or less, and preferably greater than 0 MPa or more to 2 MPa or less.

In addition, when carrying out the copolymerization, a molecular weight regulator such as hydrogen can be allowed to co-exist to modify the molecular weight of copolymers to be obtained. The molecular weight regulator may be fed either with the cyclic olefin at the same time or after feeding the cyclic olefin, but it is preferably fed before feeding the ethylene. By providing the molecular weight regulator in the polymerization reaction system, the production of a polymer which is insoluble in a hydrocarbon solvent and has high molecular weight can be effectively controlled.

When producing a cyclic olefin random copolymer, it is desirable that the molar ratio of ethylene/cyclic olefin is in the range of 85/15 or more to 40/60 or less, and more preferably 50/50 or more to 75/25 or less.

When the copolymerization reaction of ethylene with a specific cyclic olefin is carried out in the above manner, a solution of cyclic olefin random copolymer can be obtained. The concentration of cyclic olefin random copolymer contained in such copolymer-containing solution is in the range of usually 5 or more to 300 or less g/L-hydrocarbon solvent, and preferably 10 or more to 200 or less g/L-hydrocarbon solvent.

In the present specification, the polyethylene component includes, in addition to a polyethylene homopolymer, copolymers of ethylene and aforementioned cyclic olefin each having an ethylene content of 90 mol% or more and crystalline peak of 50°C or above according to a DSC measurement.

According to the invention, when copolymerizing ethylene with the specific cyclic olefin in the above manner, the polymerization catalyst is already in contact with the cyclic olefin in the polymerization reaction system at the time of charging the ethylene into the polymerization reaction system, and thus only the copolymerization of ethylene with the cyclic olefin takes place, thereby allowing an extremely small production of crystalline polymer having high ethylene content or polyethylene component insoluble in a hydrocarbon solvent, as well as reducing the polyethylene component contained in the cyclic olefin random copolymer.

Therefore, clogging of a filter or the like which is used as the means for removing a solvent-insoluble component after the polymerization reaction rarely occurs, and thus the filter is not necessarily changed so often. Further, a molded product obtained from such copolymer is improved in its transparency.

The copolymer-containing solution as mentioned above is subjected to deashing, filtration, and precipitation treatment according to usual methods suggested by, for example, JP-A No. 2-191603, JP-A No. 3-255105, and JP-A No. 6-228284, so as to obtain a cyclic olefin random copolymer from the copolymer-containing solution.

It is preferable that the ethylene content in the random copolymer of ethylene and said cyclic olefin obtained according to the production method of the invention is in the range of 40 to 85 mol% from the viewpoints of heat resistance and rigidity. Preferably, the ethylene content is 50 mol% or more. More preferably the ethylene content is 75 mol% or less. Hereat, the cyclic olefin content is preferably in the range of 15 mol% or more to 60 mol% or less. Preferably, the cyclic olefin content is 25 mol% or more. More preferably, the cyclic olefin content is 50 mol% or less. The heat resistance and the rigidity of the copolymer to be obtained can be controlled by the ethylene content, and the heat resistance and the rigidity can be improved by reducing the ethylene content.

The glass transition temperature (Tg) of the cyclic olefin random copolymer is in the range of usually 10°C or more to 240°C or less, and preferably 20°C or more to 200°C or less. When the glass transition temperature is equal to or below the upper limit of the above range, an excellent melt-moldability can be obtained, and when it is equal to or above the lower limit of the above range, the use at a high temperature becomes possible.

The melt flow rate (MFR) obtained by the measurement at 260°C under a load of 2.16 kg in accordance with ASTM D1238 is from 0.1 g/10 mins or more to 100 g/10 mins or less, and preferably from 1 g/10 mins or more to 80 g/10 mins or less. When the MFR is equal to or above the lower limit of the above range, the moldability is not impaired, and when it is equal to or below the upper limit of the range, the toughness of a molded product is not impaired, thereby being preferable.

The MFR can be controlled by the amount of hydrogen supplied into the polymerization reaction system. According to the hydrogen supply, the molecular weight can be lowered, meaning that the MFR value can be increased.

The ethylene and the cyclic olefin represented by said general formula (1) or general formula (2) are copolymerized according to the invention, but other copolymerizable unsaturated monomeric component can be also subjected to copolymerization, if necessary, within the range of not impairing the purpose of the invention.

In specific, α-olefins having 3 or more carbon atoms may be copolymerized, and such α-olefins having 3 or more carbon atoms may be exemplified by α-olefins having 3 or more to 20 or less carbon atoms, such as propylene, 1-butene, 4-methyl-1-pentene, 1-hexene, 1-octene, 1-decene, 1-dodecene, 1-tetradecene, 1-hexadecene, or 1-octadecene, 1-eicosene.
In addition, those having less equimolar than the cyclic olefin component unit in a random copolymer to be produced, such as cycloolefins e.g., cyclopentene, cyclohexene, 3-methylcycohexene, cyclooctene, etc., or non-conjugated dienes e.g., 1,4-hexadiene, 4-methyl-1,4-hexadiene, 1,7-octadiene, dicyclopentadiene, 5-ethylidene-2-norbornene, 5-vinyl-2-norbornene, etc., can be copolymerized.
The cyclic olefin random copolymer obtained in such a manner is a copolymer with no DSC melting point which is conformed to be non-crystalline also in accordance with the measurement by an X-ray diffraction method.

[EXAMPLES]

Hereinbelow, the invention will be explained with reference to Examples, but the invention is not limited by those Examples.

[Melt Flow Rate (MFR)]

The melt flow rate was measured at 260°C under a load of 2.16 kg in accordance with ASTM D1238.

[Glass Transition Temperature (Tg)]

A sample was heated up to 250°C in nitrogen under the temperature increasing rate of 10 °C/min, and then the sample was quenched. Thereafter, the sample was measured at the temperature increasing rate of 10 °C/min, with the use of DSC-20 manufactured by Seiko Denshi Kogyo K.K.

[Ethylene Content]

A sample for measurement was heat-pressed at 250°C to prepare a film for measurement. The absorbance at wavelengths of 1077 $cm^{-1}$ and 4280 $cm^{-1}$ for the film for measurement was measured using an infrared spectrophotometer (IR). The absorbance ratio (D1077/D4280) was calculated and the content of tetracyclo[4,4,0,$1^{2.5}$,$1^{7.10}$]-3-dodecene was obtained using a calibration curve drawn in advance, thereby obtaining an ethylene content from the following formula:

Formula: Ethylene Content (mol%) =

(100 - content of tetracyclo[4,4,0,$1^{2.5}$,$1^{7.10}$]-3-dodecene (mol%))

[Haze]

The haze was measured with the use of a test piece having an optical surface of 45 mmφ x 3 mm (thickness) which is injection molded by the injection molding machine (IS-50 manufactured by Toshiba Machine Co., Ltd.) which is set to a cylinder temperature of 260°C and a die temperature of 125°C, in accordance with ASTM D1003.
[Example 1]

[Catalyst Preparation]

For the transition metal catalyst component, $VO(OC_2H_5)Cl_2$ was diluted with cyclohexane to prepare a vanadium catalyst having a vanadium concentration of 18.6 mmol/L-cyclohexane.
For the co-catalyst component, ethylaluminum sesquichloride ($Al(C_2H_5)_{1.5}Cl_{1.5}$) was diluted with cyclohexane to prepare an organoaluminum catalyst having an aluminum concentration of 164 mmol/L-cyclohexane.

[Polymerization]

The copolymerization of ethylene with tetracyclo[4,4,0,$1^{2.5}$,$1^{7.10}$]-3-dodecene (hereinafter, it may be also simply referred to as tetracyclodecene) represented by the following chemical formula (7):

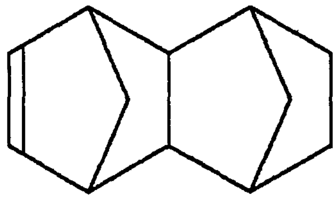

(7)

was continuously carried out in a polymerization system equipped with a polymerization vessel having an inner diameter of 700 mm and a total volume of 570 L and reaction volume of 300 L, which is equipped with a baffle plate and a stirrer, a multitubular cooler, a recycle line which extracts the polymerization reaction solution from the bottom of the polymerization vessel equipped with a stirrer and recycles into the vessel by circulating the polymerization reaction solution to the multitubular cooler, and a recycle pump provided in the recycle line.

30 L of tetracyclododecene and 270 L of cyclohexane as the polymerization solvent were charged into the polymerization vessel first, and then 0.8 mol of the organoaluminum catalyst as a co-catalyst component and 0.1 mol of the vanadium catalyst as a transition metal catalyst component were added thereto while supplying hydrogen gas at a rate of 1.5 NL/H. Thereafter, ethylene was supplied into the polymerization vessel to initiate the polymerization. After the initiation of polymerization, monomers as the raw material and the catalyst components were continuously fed into the polymerization vessel each by a predetermined amount.

As the polymerization solvent, cyclohexane was fed into the polymerization vessel at a rate of 233 kg/H. Further, ethylene and hydrogen gas which serves as a molecular weight regulator were fed to a gaseous phase part in the polymerization vessel at rates of 2.69 kg/H and 2.2 NL/H, respectively. The polymerization reaction solution was stirred with the stirrer.

The polymerization temperature was controlled to be 10°C by running a coolant through the jacket provided outside the polymerization vessel and the shell side of multitubular cooler. The polymerization pressure was controlled to be 0.1 MPa in gauge pressure by introducing a nitrogen gas to the polymerization vessel.

When the copolymerization reaction of ethylene with tetracyclododecene was continuously carried out under the above conditions, a copolymer-containing solution having a concentration of ethylene/tetracyclododecene copolymer of 30 g/L-cyclohexane can be obtained.

[Deashing]

To the solution containing a copolymer of ethylene and tetracyclododecene extracted from the polymerization vessel, boiler water at 80°C and a solution containing 4% by mass of NaOH as the pH adjuster were added to terminate the copolymerization reaction, and at the same time a catalyst residue remained in the copolymer-containing solution was removed from the copolymer-containing solution (deashing). After the deashing treatment, the copolymer-containing solution was stored in a vessel equipped with a stirrer which has an inner diameter of 900 mm and an effective volume of 1.0 $m^3$, and cooled to a temperature around 30 to 40°C by running water through the jacket which is provided outside the vessel.

[Filtration]

The thus obtained copolymer-containing solution was continuously filtered at a rate of 261 kg/hr by feeding the solution to a filter equipment having 34 cotton fiber wound filters (vertical wound filter, manufactured by Nippon Roki Co., Ltd.) each having an outside diameter of 63.5 mm, an inside diameter of 28 mm, a length of 1 m, and a nominal rating of 1 $\mu$m.

The resulting solution was further filtered continuously at a rate of 261 kg/hr by feeding the solution to a filter equipment having three of cartridge filters (BX filter, depth-type, manufactured by Balston Co., Ltd.) each having an outside diameter of 64 mm, an inside diameter of 51 mm, and a length of 476 mm and prepared with unwoven cloth (nominal rating of 2 $\mu$m) made of borosilicate glass microfibers. During the filtration, the pressure difference was not greater than 0.15 MPa.

The resulting solution was further filtered continuously at a rate of 261 kg/hr by feeding the solution to a filter equipment having three of depth-type filters (AQ filter, manufactured by Balston Co. , Ltd.) each having an outside diameter of 59 mm, an inside diameter of 51 mm, and a length of 476 mm, and prepared with unwoven cloth (nominal rating of 0.9 $\mu$m) made of borosilicate glass microfibers. During the filtration, the pressure difference was not greater than 0.15 MPa.

The resulting solution was further filtered continuously at a rate of 261 kg/hr by feeding the solution to a filter equipment

having three of depth-type filters (AAQ filter, manufactured by Balston Co., Ltd.) each having an outside diameter of 59 mm, an inside diameter of 51 mm, and a length of 476 mm and prepared with unwoven cloth (nominal rating of 0.3 μm) made of borosilicate glass microfibers. During the filtration, the pressure difference was not greater than 0.15 MPa.
Finally, the resulting solution was continuously filtered at a rate of 261 kg/hr by feeding the solution to a filter equipment having one of metal cartridge filter (PSP 03 filter, pleated-type, manufactured by Brunswick, Co., Ltd.) having an outside diameter of 61 mm and a length of 510 mm and prepared with SUS 304 unwoven cloth having a nominal rating of 0.3 μm.

[Precipitation]

Acetone was added to the copolymer-containing solution to precipitate the copolymer, and the precipitated copolymer was separated.
Unreacted monomers were extracted from the resulting cyclic olefin random copolymer, and then the copolymer was separated, pelletized, and dried.

[Classification]

Before filling the pellets dried as described above in product containers, the pellets were freed from fine particles having not greater than 1/10 of the mass of the pellet by using an air classifier. In specific, they were freed from wear powder of the pellets produced during drying, those pellets having small diameters, crushed pellets, fine foreign materials adhering to the pellets, and the like.
The fine materials were removed by using a zigzag type air classifier having a length of 370 mm, introducing nitrogen at a rate of 30 to 40 $Nm^3$/hr from the bottom, and dropping pellets at a rate of 300 kg/hr from the top.
With respect to the copolymer thus obtained, the MFR was 40 g/10 mins, the ethylene content was 65 mol%, and the haze was 0.1%.
Further, when the polymerization vessel was opened for inspection after the continuous polymerization had been taken place for 60 days, polymer depositions mainly including polyethylene were hardly seen in inner wall of the polymerization vessel and transport pipe for polymer-containing solution, and inside the multitubular cooler by naked eyes.

[Comparative Example 1]

Example 1 was repeated except that the organoaluminum catalyst and the vanadium catalyst were added after feeding the ethylene into the polymerization vessel. As a result, the clogging of filter was occurred frequently during the filtration of the copolymer-containing solution, and thus it was not possible to run the operation.
With respect to the copolymer thus obtained, the MFR was 40 g/10 mins, the ethylene content was 65 mol%, and the haze was 2.3%. The MFR and ethylene content values were the same as those in Example 1, but the haze gave a very poor result.
Further, when the polymerization vessel was opened for inspection, white depositions were seen in the inner wall of the polymerization vessel and transport pipe for polymer-containing solution, and inside the multitubular cooler, by naked eyes. When the depositions were collected and assayed by infrared spectrophotometer (IR), it was found that the deposition is a polymer mainly containing polyethylene.

## Claims

**1.** A process for producing a cyclic olefin random copolymer by copolymerizing:

(a) ethylene; with
(b) at least one cyclic olefin selected from the group consisting of unsaturated monomers each represented by following general formula (1) or (2):

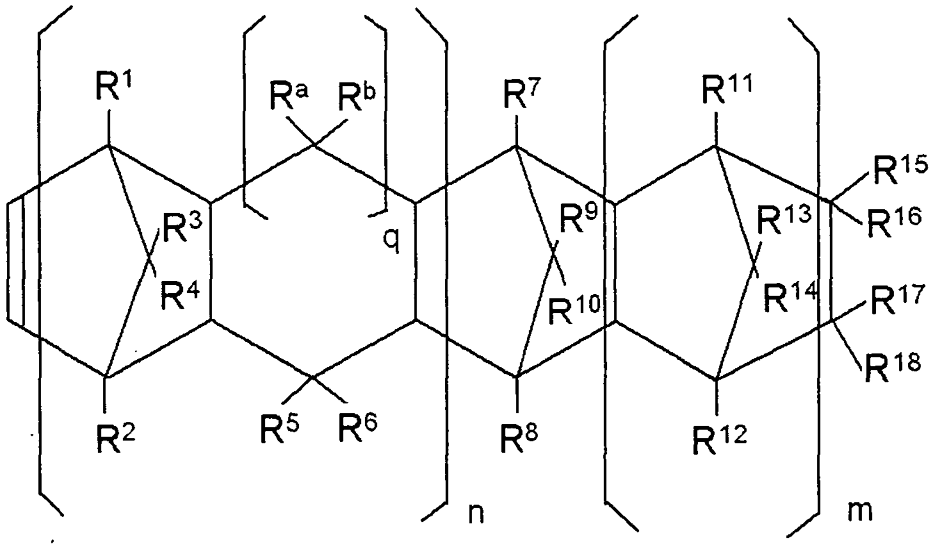

(1)

wherein n is 0 or 1; m is 0 or a positive integer; q is 0 or 1, where if q is 0, the bonds are bound to each other to form a 5-membered ring, and if q is 1, $R^a$ and $R^b$ are each independently a hydrogen atom, a halogen atom, or a hydrocarbon group; and $R^1$ to $R^{18}$ are each independently a hydrogen atom, a halogen atom, or a hydrocarbon group, where the halogen atom in $R^1$ to $R^{18}$ and $R^a$ and $R^b$ is a fluorine atom, a chlorine atom, a bromine atom, or an iodine atom;

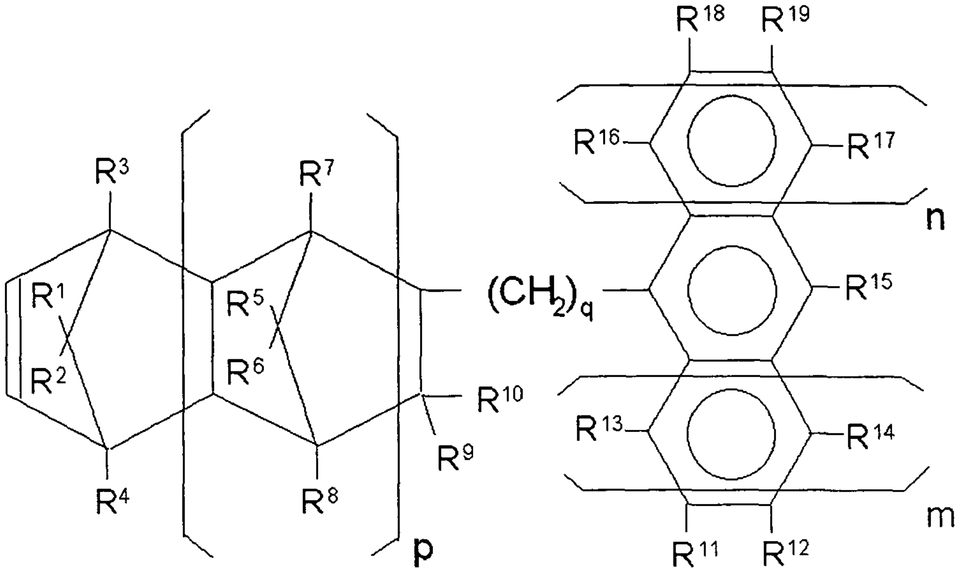

(2)

wherein p and q are each 0 or a positive integer; m and n are each 0, 1, or 2; and $R^1$ to $R^{19}$ are each independently a hydrogen atom, a halogen atom, a hydrocarbon group, or an alkoxy group, in the presence of a polymerization catalyst containing a transition metal catalyst component and a co-catalyst component,
wherein in the process for producing a cyclic olefin random copolymer, at least one of the transition metal catalyst component and the co-catalyst component is brought into contact with the cyclic olefin (b), and then brought into contact with the ethylene (a).

**2.** The process for producing a cyclic olefin random copolymer as claimed in claim 1, wherein at least one of the transition metal catalyst component and the co-catalyst component is brought into contact with the cyclic olefin (b) in the presence of a hydrocarbon solvent.

3. The process for producing a cyclic olefin random copolymer as claimed in claim 1 or 2, wherein at least one of the transition metal catalyst component and the co-catalyst component is brought into contact with the cyclic olefin (b), and then brought into contact with the ethylene (a) in the presence of a molecular weight regulator.

4. The process for producing a cyclic olefin random copolymer as claimed in any one of claims 1 to 3, wherein the polymerization catalyst containing the transition metal catalyst component and the co-catalyst component is brought into contact with the cyclic olefin and then brought into contact with the ethylene.

5. The process for producing a cyclic olefin random copolymer as claimed in any one of claims 1 to 4, wherein the transition metal catalyst component and the co-catalyst component are mixed and brought into contact with the cyclic olefin in a polymerization vessel first, and then the ethylene is fed into the polymerization vessel.

6. The process for producing a cyclic olefin random copolymer as claimed in claim 5, wherein the reaction volume of said polymerization vessel is 100L or more.

7. The process for producing a cyclic olefin random copolymer as claimed in any one of claims 1 to 6, wherein the copolymerization of the ethylene (a) with the cyclic olefin (b) is carried out in liquid phase including the hydrocarbon solvent.

8. The process for producing a cyclic olefin random copolymer as claimed in any one of claims 1 to 7, wherein the ethylene (a) is copolymerized with the cyclic olefin (b) by a continuous polymerization process.

9. The process for producing a cyclic olefin random copolymer as claimed in any one of claims 1 to 8, wherein the cyclic olefin (b) is tetracyclo $[4.4.0.1^{2,5}.1^{7,10}]$-3-dodecene.

10. A method for initiating polymerization of cyclic olefin random copolymer in copolymerizing:

(a) ethylene; with
(b) at least one cyclic olefin selected from the group consisting of unsaturated monomers each represented by following general formula (1) or (2):

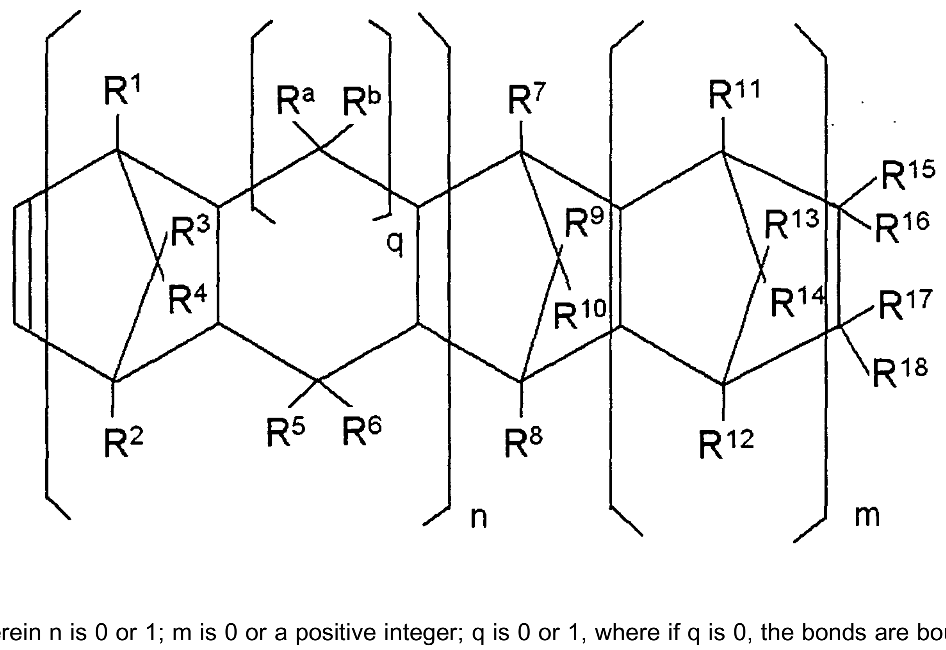

(1)

wherein n is 0 or 1; m is 0 or a positive integer; q is 0 or 1, where if q is 0, the bonds are bound to each other to form a 5-membered ring, and if q is 1, $R^a$ and $R^b$ are each independently a hydrogen atom, a halogen atom, or a hydrocarbon group; and $R^1$ to $R^{18}$ are each independently a hydrogen atom, a halogen atom, or a hydrocarbon group, where the halogen atom in $R^1$ to $R^{18}$ and $R^a$ and $R^b$ is a fluorine atom, a chlorine atom, a bromine atom, or an iodine atom;

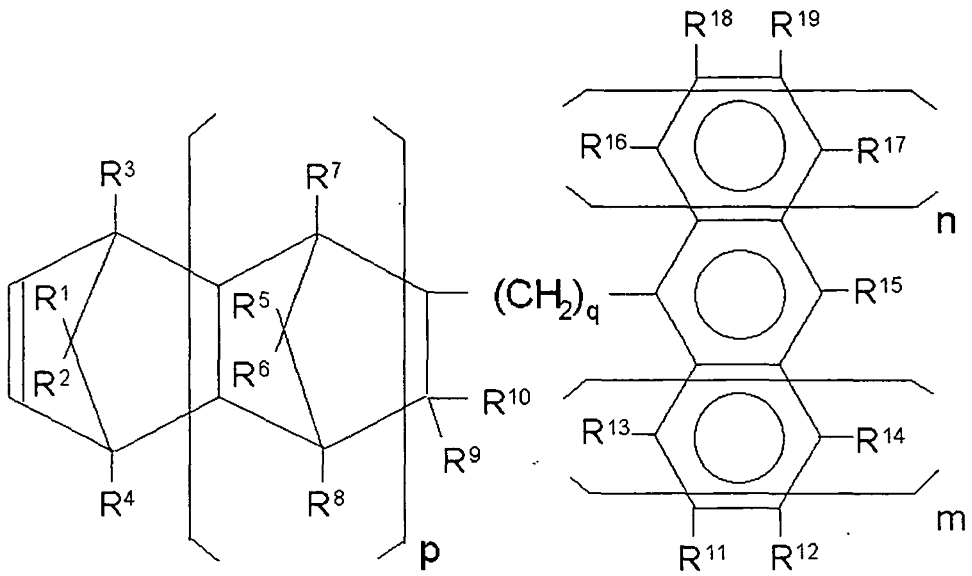

(2)

wherein p and q are each 0 or a positive integer; m and n are each 0, 1, or 2; and $R^1$ to $R^{19}$ are each independently a hydrogen atom, a halogen atom, a hydrocarbon group, or an alkoxy group, in the presence of a polymerization catalyst containing a transition metal catalyst component and a co-catalyst component,
wherein in the method for initiating polymerization of cyclic olefin random copolymer, the polymerization catalyst containing a transition metal catalyst component and a co-catalyst component is brought into contact with the cyclic olefin (b) first, and then brought into contact with the ethylene (b).

**INTERNATIONAL SEARCH REPORT**

International application No.
PCT/JP2006/318620

A. CLASSIFICATION OF SUBJECT MATTER
*C08F210/02*(2006.01)i, *C08F232/00*(2006.01)i

According to International Patent Classification (IPC) or to both national classification and IPC

B. FIELDS SEARCHED

Minimum documentation searched (classification system followed by classification symbols)
C08F210/02, C08F232/00-232/08

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2003-082017 A (Maruzen Petrochemical Co., Ltd.), 19 March, 2003 (19.03.03), Claims; Par. Nos. [0028], [0037] (Family: none) | 1-8,10 |
| X | JP 04-189806 A (Mitsubishi Petrochemical Co., Ltd.), 08 July, 1992 (08.07.92), Claims; page 4, upper left column; page 5, upper left column to upper right column (Family: none) | 1-10 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 06 December, 2006 (06.12.06) | 12 December, 2006 (12.12.06) |
| Name and mailing address of the ISA/ Japanese Patent Office | Authorized officer |
| Facsimile No. | Telephone No. |

Form PCT/ISA/210 (second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2191603 A
- JP 3255105 A
- JP 6228284 A
- JP 7145213 A
- JP 61221206 A
- JP 64000106 A
- JP 2173112 A
- JP 2078687 A
- JP 1501950 A
- JP 1502036 A
- JP 3179005 A
- JP 3179006 A
- JP 3207703 A
- JP 3207704 A